# EUROPEAN PATENT APPLICATION

(11) **EP 4 464 203 A1**
(43) Date of publication of application: **20.11.2024**
(21) Application number: 22919978.1
(22) Date of filing: 09.12.2022
(51) Int. Cl.: A47J 27/00, A47J 36/00

(54) **POT BODY MOUNTING STRUCTURE AND COOKING DEVICE**

(30) Priority: 17.01.2022 CN 202220116207 U
(71) Applicant: Shenzhen Botinkit Co., Ltd., Shenzhen, Guangdong 518000 (CN)
(72) Inventor: LIU, Fuzhuang, Shenzhen, Guangdong 518000 (CN); FU, Qiang, Shenzhen, Guangdong 518000 (CN); GUAN, Chenyu, Shenzhen, Guangdong 518000 (CN)
(74) Representative: Cleanthous, Marinos
(86) International application number: PCT/CN2022/137747
(87) International publication number: WO 2023/134345

(57) **Abstract**

The embodiments of the present application disclose a wok mounting structure and a cooking apparatus, wherein the cooking apparatus comprises the wok mounting structure; the wok mounting structure comprises a mounting element and an elastic device; the mounting element is provided with a cavity, with an upper end open; the mounting element has an upper edge that is provided with a downward concave slot; the elastic device is located in the cavity. A buckle that matches the slot is arranged on the wok; both ends of the elastic device fit in with the mounting element and the wok, respectively; in a free state, the elastic device has a pre-tightening force greater than or equal to the gravity of the wok. As the elastic device is arranged in the mounting element, it not only can realize prompt assembly and disassembly of the wok, but also facilitates matching and locking.

## Description

### TECHNICAL FIELD

The embodiments of the present application relate to the technical field of cookware, and particularly, to a wok mounting structure and a cooking apparatus.

### BACKGROUND

With the accelerated pace of people's lives, there has been an increasing demand for cooking apparatus that can be automatic in cooking, hands-free, convenient, and fast. A cooking machine, under control of a microcomputer, can automatically cook without the need for human supervision. It can be used for multiple purposes with a single pot, and is time-saving, labor-saving, and smoke free. Therefore, it is increasingly favored by more and more users.

When it comes to mounting a wok in the prior art, it refers to the mounting of not only a wok, but also such components inside a wok cover as a heating device and a power device. Furthermore, there exists a need to maintain and replace these components. On the other hand, a user will replace the wok according to needs of dishes during cooking. Therefore, how to improve the prompt disassembly of the wok is an urgent technical problem that persons skilled in the art need to solve.

### SUMMARY

The embodiments of the present application provide a wok mounting structure and a cooking apparatus to solve the technical problem of inconvenient disassembly and assembly of the wok in the cooking machine.

To achieve this purpose, the present utility model adopts the following technical solution.

The embodiments of the present application provide a wok mounting structure comprising a mounting element and an elastic device; the mounting element is provided with a cavity that has an opening at an upper end, and the mounting element is provided with a downward concave slot on an upper edge; the elastic device is located in the cavity; the wok is provided with a buckle that matches the slot; both ends of the elastic device fit in with the mounting element and the wok, respectively; in a free state, the elastic device has a pre-tightening force greater than or equal to the gravity of the wok.

In one of the embodiments, the slot is provided with an introduction section, which has an inner diameter tapered from top to bottom.

In one of the embodiments, the number of the slot is at least two.

In one of the embodiments, the introduction section has a cross-section shape that is an inverted isosceles trapezoid or an inverted right-angled trapezoid.

In one of the embodiments, the slot is provided with a hook section, which comprises an arc section as formed by extending towards the upper edge of the mounting element.

In one of the embodiments, the slot further comprises a transition section, which is arranged between the introduction section and the hook section, and has one end in connection with the introduction section and the other end in connection with the hook section.

In one of the embodiments, the elastic device is a compression spring.

In one of the embodiments, the buckle is a snap column, which is provided with a abutting portion at a free end.

The embodiments of the present application further provide a cooking apparatus comprising a main structure; the main structure is provided with an accommodating cavity for accommodating the wok, and comprises the wok mounting structure as described in any one of the above, and the mounting element is located in the accommodating cavity.

In one of the embodiments, the cooking apparatus further comprises a temperature measuring device and a circuit board, and the temperature measuring device is electrically connected to the circuit board and fixed on the circuit board.

The present application has the following beneficial effects.

When the wok needs to be mounted in the present application, it is put close to the mounting element, then the buckle on the wok is inserted into the slot, and they fit in with each other to lock together. When it comes to disassembling the wok, the disassembly of the wok can be completed as long as a force opposite to that for mounting the wok is used to separate the buckle from the slot. As the elastic device is arranged in the mounting element, during the assembly and disassembly of the wok, it not only can realize prompt assembly and disassembly, but also facilitates matching and locking, makes it easy for weak users to use, and improves the market competitiveness of the product.

The inner diameter of the introduction section is arranged as a tapered structure, which starts with an open end and decreases gradually from top to bottom. When the buckle fits in with the slot, the slot has a self-guiding effect, which can achieve blind alignment between the wok and the mounting element to assemble or disassemble the wok quickly.

In the embodiments of the present application, the temperature measuring device is fixed on the circuit board, so that the temperature measuring device and the wok are mounted in a non-contact manner. During the assembly or disassembly of the wok, the space is sufficient for operation, and there is no need to give way to each other, which is convenient and quick for users to use, without damaging the temperature measuring device.

### BRIEF DESCRIPTION OF DRAWINGS

To make the technical solutions in the embodiments of the present application or in the prior art clearer, a brief introduction will be given to the drawings that need to be used in the illustrations of the embodiments or the prior art. It is obvious that the drawings in the following illustrations are some embodiments of the present application, and persons skilled in the art can obtained other drawings on the basis of these drawings without creative labor.
Figure 1 is a structure diagram of a wok mounting structure in an embodiment of the present application;
Figure 2 is an enlarged partial view of Figure 1 in an embodiment of the present application;
Figure 3 is a structure diagram of matching between a mounting element and an elastic device in an embodiment of the present application;
Figure 4 is an enlarged partial view of Figure 3 in an embodiment of the present application;
Figure 5 is a structure diagram of a cooking apparatus in an embodiment of the present application;
Figure 6 is another structure diagram of a cooking apparatus in an embodiment of the present application.

In the drawings: 10 mounting element, 110 cavity, 120 slot, 122 introduction section, 124 hook section, 20 elastic device, 30 wok, 310 buckle (snap column), 100 cooking apparatus, 40 main structure, 42 accommodating cavity.

### DESCRIPTION OF EMBODIMENTS

To make the objectives, technical solutions, and advantages of the present application clearer, the technical solutions of the present application will be described below in detail through manners of implementation with reference to the drawings in the embodiments of the present application. Obviously, the described embodiments are some of the embodiments in the present application, rather than all of them. In the absence of conflicts, the embodiments in the present application and the features in the embodiments can be combined with each other. All other embodiments that persons skilled in the art obtain based on the embodiments in the present application without creative labor fall within the scope of protection of the present application.

It should be noted that in the drawings, the same or similar reference signs indicate the same or similar elements or elements with the same or similar functions from beginning to the end. In the illustrations of the present application, the terms such as "center", "longitudinal", "transverse", "front", "back", "left", "right", "vertical", "horizontal", "top", "bottom", "inside", and "outside" indicate the orientation or positional relationship on the basis of the orientation or positional relationship shown in the drawings, only for the convenience of describing the present application and simplifying the illustrations, instead of indicating or implying that the device or component referred to must have a specific orientation, or be constructed and operated in a specific orientation, and therefore cannot be understood as limitations upon the scope of protection of the present application. In the illustrations of the present application, "first" and "second" among others are only used to distinguish each other, rather than indicate their importance, order and the like.

In the illustrations of the present application, unless otherwise specified and limited, the terms "mount", "link", and "connect" should be broadly understood. For example, the connection can be fixed connection, movable connection, or detachable connection; the connection can be mechanical connection or electrical connection; the connection can be direct connection, indirect connection through an intermediate medium, or internal connection between two components. Persons skilled in the art can understand the specific meanings of the above terms in the present application according to specific situations.

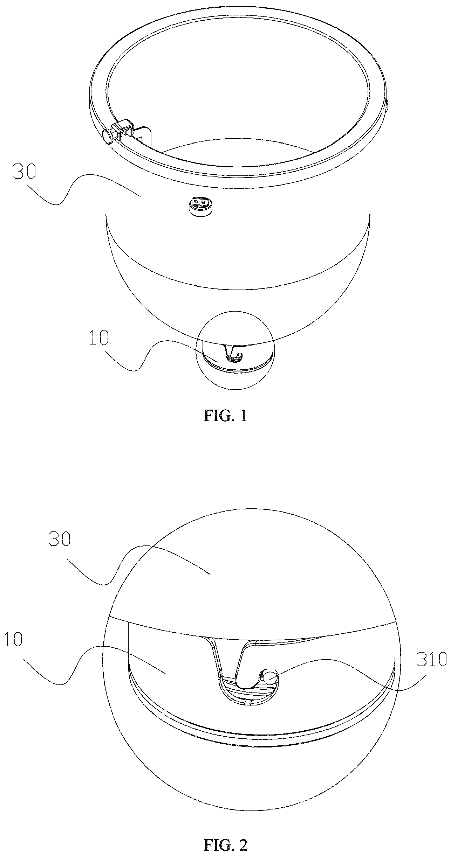

As shown in Figures 1 to 3, a wok mounting structure comprises a mounting element 10 and an elastic device 20. The mounting element 10 is provided with a cavity 110 that has an opening at an upper end, and the mounting element 10 is provided with a downward concave slot 120 on an upper edge. The elastic device 20 is located in the cavity 110. The wok 30 is provided with a buckle 310 that matches the slot 120. Both ends of the elastic device 20 fit in with the mounting element 10 and the wok, respectively. In a free state, the elastic device 20 has a pre-tightening force greater than or equal to the gravity of the wok 30.

When the wok 30 and the mounting element 10 need to be mounted, the wok 30 is put close to the mounting element 10, then the buckle 310 on the wok 30 is inserted into the slot 120, and they fit in with each other to lock together. When it comes to disassembling the wok 30, the assembly of the wok 30 can be completed as long as a force opposite to that for mounting the wok 30 is used to separate the buckle 310 from the slot 120. As the elastic device 20 is arranged in the mounting element 10, during the assembly and disassembly of the wok 30, it not only can realize prompt assembly and disassembly, but also facilitates matching and locking, makes it easy for weak users to use, and improves the market competitiveness of the product.

Wherein, preferably, the number of the slot 120 is 3 in the present embodiment. Moreover, the number of the slot 120 in the present application can be changed according to customers' needs. As shown in Figure 2, the periphery of the mounting element 10 extends upward to form the cavity 110. In the present embodiment, preferably, the mounting element 10 extends to form a hollow cylindrical structure, and the cavity 110 is the inner cavity of the cylindrical structure.

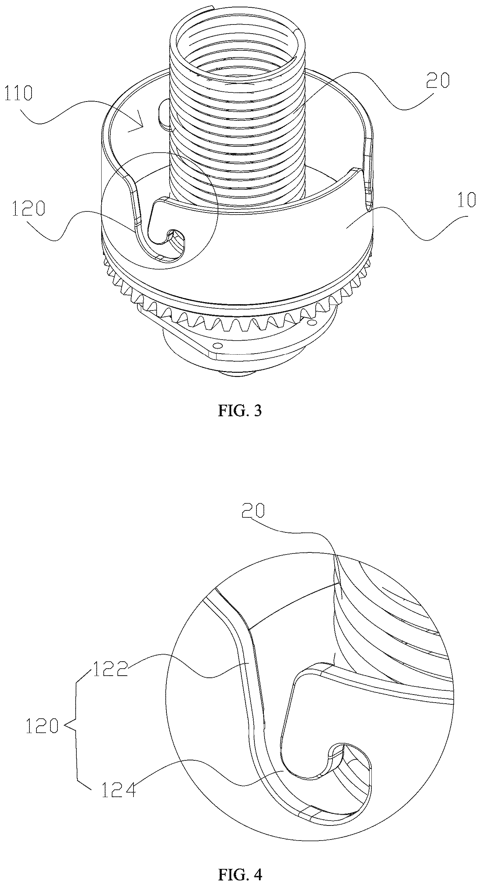

As shown in Figures 3 and 4, the slot 120 is provided with an introduction section 122, which has an inner diameter tapered from top to bottom. Preferably, the introduction section 122 has a cross-section shape that is an inverted isosceles trapezoid or an inverted right-angled trapezoid. When the buckle 310 fits in with the slot 120, the buckle 310 slides in from an opening of the introduction section 122 and is limited by the change in the cross section of the introduction section 122, so that it can stably fit in with the slot 120 to fasten and mount the wok 30 and the mounting element 10. When the buckle 310 passes through the wide-open opening of the slot 120, it can achieve the self-guiding ability, thereby enabling blind alignment between the buckle 310 and the slot 120. In the present embodiment, preferably, the cross-section shape of the introduction section 122 is arranged as an inverted isosceles trapezoid, and the buckle 310 can smoothly slide into the slot 120 regardless of whether it slides into the slot 120 from the left or right side, thereby achieving the blind alignment.

The slot 120 is provided with a hook section 124, which comprises an arc section as formed by extending towards the upper edge of the mounting element 10. After the buckle 310 slides into the slot 120, it can smoothly enter the hook section 124 of the slot 120. The hook section 124 is designed to be opposite to the introduction section 122, which makes it difficult for the buckle 310 to slide out of the slot 120. Moreover, under the action of the elastic device 20, the buckle 310 can be stably fixed in the slot 120. When there are two slots 120 or more, the hook sections 124 of the slots 120 share the bending-extending direction.

In another embodiment, the slot 120 further comprises a transition section (not shown in the drawings), which is arranged between the introduction section 122 and the hook section 124, and has one end in connection with the introduction section 122 and the other end in connection with the hook section 124. After the buckle 310 enters the slot 120 through the introduction section 122, the buckle 310 can fully enter the slot 120 through adjustment in the transition section. Preferably, the transition section is a straight-line section.

As shown in Figure 2, the buckle 310 is a snap column, which has a cross section in a shape of a circle or polygon. The snap column 310 can smoothly slide into the slot 120 from an upper edge of the slot 120. Preferably, the snap column 310 is provided with a abutting portion at a free end. The abutting portion can be convex along the outer circumference of the snap column 310, either intermittently arranged around the snap column 310 or continuously arranged to form a circular structure. When the buckle 310 is fixed in the slot 120, the abutting portion can resist against the wall of the mounting element 10, thereby avoiding sliding out due to the vibration of the mounting element 10.

Preferably, the elastic device 20 is a compression spring. The direction of the elastic change of the compression spring is consistent with that of the introduction section 122 of the slot 120. The elastic force of the compression spring accumulates or releases during the assembly or disassembly of the wok, thereby assisting a user in completing the assembly or disassembly of the wok 30.

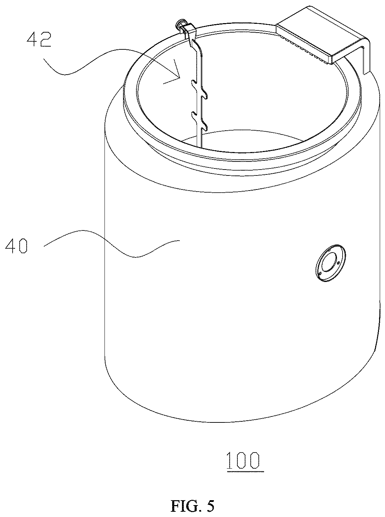

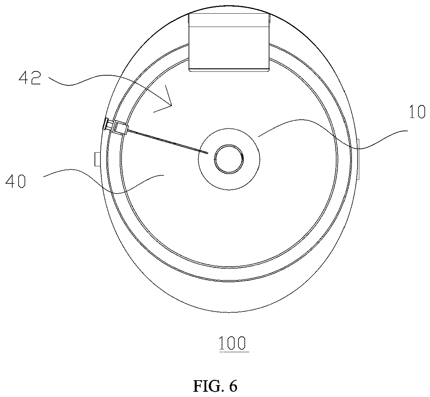

As shown in Figures 5 and 6, a cooking apparatus 100 comprises a main structure 40, which is provided with an accommodating cavity 42 for accommodating the wok and the wok mounting structure, and the mounting element 10 is located in the accommodating cavity 42. The matching and fixing manners of the wok 30 and the mounting element 10 are described above, and will not be repeated in the present application.

The cooking apparatus 100 further comprises a temperature measuring device and a circuit board, wherein the temperature measuring device is electrically connected to the circuit board and fixed on the circuit board. In this preferred embodiment, the temperature measuring device is connected to the circuit board through a circuit board. The temperature measuring device is a non-contact temperature measuring device, preferably an infrared temperature measuring device. The temperature measuring device is fixed on the circuit board, so that the temperature measuring device is mounted in a non-contact manner with the wok. During the assembly or disassembly of the wok, sufficient space can be left for movements of assembly or disassembly, and there is no need to give way to the corresponding temperature measuring device, which is convenient and fast, without damaging the temperature measuring device.

It should be noted that the above content only relates to the preferred embodiments and the technical principles applied in the present application. Persons skilled in the art will understand that the present application is not limited to the specific embodiments described herein, and they can make various obvious changes, readjustments, and substitutions without departing from the scope of protection of the present application. Therefore, although the present application has been described in detail through the above embodiments, the present application is not limited to the above embodiments, and can further include more equivalent embodiments without departing from the concept of the present application. The scope of the present application is determined by the scope of the appended claims.

## Claims

1. A wok mounting structure, comprising: a mounting element and an elastic device, wherein the mounting element is provided with a cavity that has an opening at an upper end, and the mounting element is provided with a downward concave slot on an upper edge; the elastic device is located in the cavity; the wok is provided with a buckle that matches the slot; both ends of the elastic device fit in with the mounting element and the wok, respectively; in a free state, the elastic device has a pre-tightening force greater than or equal to the gravity of the wok.

2. The wok mounting structure of claim 1, wherein the slot is provided with an introduction section, which has an inner diameter tapered from top to bottom.

3. The wok mounting structure of claim 1, wherein the number of the slot is at least two.

4. The wok mounting structure of claim 2, wherein the introduction section has a cross-section shape that is an inverted isosceles trapezoid or an inverted right-angled trapezoid.

5. The wok mounting structure of claim 2, wherein the slot is provided with a hook section, which comprises an arc section as formed by extending towards the upper edge of the mounting element.

6. The wok mounting structure of claim 5, wherein the slot further comprises a transition section, which is arranged between the introduction section and the hook section, and has one end in connection with the introduction section and the other end in connection with the hook section.

7. The wok mounting structure of claim 1, wherein the elastic device is a compression spring.

8. The wok mounting structure of claim 1, wherein the buckle is a snap column, which is provided with a abutting portion at a free end.

9. A cooking apparatus, comprising a main structure, which is provided with an accommodating cavity for accommodating the wok, wherein it comprises the wok mounting structure of any one of claims 1 to 8, and the mounting element is located in the accommodating cavity.

10. The wok mounting structure of claim 9, wherein the cooking apparatus further comprises a temperature measuring device and a circuit board, and the temperature measuring device is electrically connected to the circuit board and fixed on the circuit board.
